# EUROPEAN PATENT APPLICATION

(11) **EP 1 300 737 A2**
(43) Date of publication of application: **09.04.2003**
(21) Application number: 02019934.5
(22) Date of filing: 04.09.2002
(51) Int. Cl.: G05B 19/042

(54) **Method and apparatus for establishing addresses for plural actuators connected to a bus**

(30) Priority: 19.09.2001 US 956180
(71) Applicant: TRW Inc., Lyndhurst, Ohio 44124 (US)
(72) Inventor: Huhn, Scott G., Onalaska, Wisconsin 54650 (US); Holmquist, Keith C., Winona, Minnesota 55987 (US)
(74) Representative: Wagner, Karl H., Dipl.-Ing.

(57) **Abstract**

A method and apparatus are provided for establishing an actuator address in a system (20) having plural actuators (50-54). A look-up table (122) stores all desired addresses corresponding to the plural actuators. An actuator of the plural actuators is actuated (310, 318) and at least one operating parameter (316, 324, 326) is determined. An address from the stored desired addresses is selected (328) from the look-up table of all addresses of the mounted actuator in response to the at least one operating parameter (316, 324, 326).

## Description

### Technical Field

The present invention is directed to an address establishing method and apparatus and is particularly directed to a method and apparatus for establishing addresses for plural actuators connected to a common bus.

### Background of the Invention

Systems including plural actuators are known in the art. A vehicle HVAC system includes plural actuators for controlling fluid flow in associated fluid conduits to, in turn, control the environmental condition of the vehicle cabin. These actuators are separately controlled in response to control signals applied to associated wires connected to the actuators.

### Summary of the Invention

The present invention is directed to a method and apparatus for establishing an actuator address in a system having plural actuators connected to a common bus. An actuator look-up table stores all desired addresses corresponding to the plural actuators. An actuator of the plural actuators is mounted in position and at least one operating parameter is determined. An address from the stored desired addresses is selected for the mounted actuator in response to the determined at least one operating parameter.

In accordance with an exemplary embodiment, a calibration or learn command is used to teach the actuator its address. All possible actuator addresses are stored in a look-up table of the actuator. The actuator is mounted and commanded to move from a low-end calibration point to a high-end calibration point. In response to the value of one of the calibration points and the span between the calibration points, an address from the look-up table is selected.

In accordance with one aspect of the present invention, an apparatus is provided for use in a HVAC system having plural fluid flow control doors movable to control fluid flow in the HVAC system, each door having an associated actuator. The actuator comprises mounting means for securing the actuator to an associated door in a known orientation with the associated door. A position sensor senses a position of the associated door and provides a signal indicative thereof. A motor, when energized, moves the associated door. The apparatus further includes a controller for controlling energization of the motor and monitoring the position sensor. The controller includes means for determining at least one actuator operating parameter for the actuator and means for determining an address for the actuator in response to the determined at least one operating parameter of the associated door. The at least one operating parameter is determined in response to motor energization and sensed position.

In accordance with another aspect of the present invention, a method is provided for establishing an actuator address in a system having plural actuators. The method comprises the steps of storing all desired addresses, mounting an actuator of the plurality of actuators to a device using the plurality of actuators, determining at least one operating parameter of the mounted actuator, and selecting the address from the stored desired addresses for the mounted actuator in response to the at least one operating parameter of the mounted actuator.

In accordance with another aspect of the present invention, a method is provided for establishing an actuator address in a HVAC system having plural actuators for controlling associated fluid flow control doors in the HVAC system. The method comprises the steps of storing all desired addresses to correspond to the plural actuators, mounting an actuator of the plural actuators to an associated door in a known mechanical orientation, actuating the mounted actuator to move the associated door and measuring a first operating parameter, actuating the mounted actuator to move the associated door and measuring a second operating parameter, and selecting the actuator address from the stored desired addresses for the mounted actuator in response to the first operating parameter and the second operating parameter.

### Brief Description of the Drawings

The foregoing and other features and advantages of the present invention will become apparent to those skilled in the art to which the present invention relates upon reading the following description with reference to the accompanying drawings, in which:
Fig. 1 is a functional block diagram of a vehicle HVAC system having plural actuators made in accordance with the present invention connected to a common control or command bus;
Fig. 2 is a functional block diagram of an actuator made in accordance with the present invention;
Fig. 3 is an actuator mounted in a first orientation in accordance with the present invention;
Fig. 4 is a fluid conduit portion of the HVAC system of Fig. 1 showing actuator mounting bosses;
Fig. 5 is an actuator mounted in a second orientation in accordance with the present invention;
Figs. 6-8 are graphic representations of actuators having associated low-end and high-end calibration values and associated span values;
Fig. 9 flow chart of a control process in accordance with the present invention; and
Fig. 10 is a look-up table showing actuator address for the examples shown in Figs. 6-8.

### Description of Preferred Embodiment

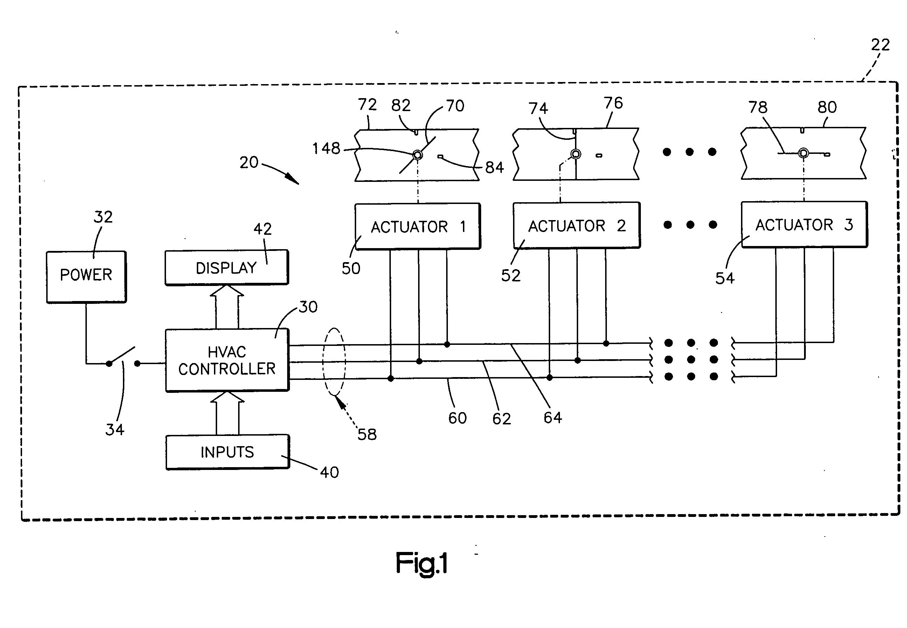

Referring to Fig. 1, a heating, ventilation, air conditioning ("HVAC") system 20 for a vehicle 22 is shown. Although the present invention is described with reference to an HVAC system, it is applicable to any system having plural actuators that are to be separately addressed. The HVAC system 20 includes an HVAC controller 30 connectable to a source of electrical power 32, such as a voltage regulator connected to the vehicle battery (not shown). The HVAC controller 30 is connected to the source of electrical power 32 through a switch 34 associated with the vehicle ignition switch. When the ignition switch is turned ON, the HVAC controller 30 is energized. When the ignition switch is turned OFF, the switch 34 may open immediately or may remain closed for a time period and then open thereby removing electrical power from the HVAC system.

Inputs 40 are connected to the HVAC controller 30 to command the controller 30 to provide the desired environmental control. These inputs may include selection devices accessible to the vehicle operator such as temperature selection switches, fan settings, air diverter selection switches, etc. Other inputs 40 may include sensor inputs such as from temperature sensors located within the vehicle cabin. A display 42 is connected to the controller 30 to display present environmental conditions, e.g., present temperature, and other information as may be desired.

The HVAC controller 30 is connected to a plurality of addressable actuators 50, 52, and 54 through a common command bus 58. A bus protocol is used to coordinate serial communications between the controller 30 and each of the actuators 50-54. The bus protocol used by the present invention can take any of several known forms. For example, Local Interconnect Network ("LIN") or Controller Area Network ("CAN") protocols can be used. LIN protocol is used in this description of a preferred embodiment of the present invention, it being understood that other bus protocols can be used. LIN provides a single wire serial communication arrangement that is particularly useful in automotive applications.

The bus 58 includes a ground wire 60 to provide a common electrical ground connection for each of the actuators, a power wire 62 to provide electrical power to each of the actuators, and a command wire 64 used to send and receive serial communications using LIN protocol between the HVAC controller 30 and each of the actuators 50, 52, 54. Although three actuators are shown and described, it will be appreciated that a plural actuator HVAC system made in accordance with the present invention can use any number of actuators.

Each of the actuators 50-54 are connected to an associated fluid flow control device. Specifically, actuator 50 is controllable connected to a valve door or flap 70 mounted within a conduit 72. Actuator 52 is connected to a valve door 74 mounted within a conduit 76. Actuator 54 is connected to a valve door 78 mounted in a conduit 80.

Certain of the conduits of the HVAC system 20 provide fluid communication between either a heater core, air conditioner evaporator, or an outside air source to vent openings within the vehicle cabin. The doors or flaps in these types of conduits are used to control cabin temperature. The associated door or flap in a conduit controls the amount of the fluid communication between its associated heating, ventilation, air conditioning source and the vehicle cabin so as to permit infinitely variable temperature control within the cabin.

Other of the conduits are used to direct the fluid flow. The doors or flaps in these other types of conduits control the actual direction of the fluid flow or from which cabin vents the fluid flow will exit. These doors or flaps are referred to as diverters. Appropriately located fans aid in the fluid flow through the conduits. A sufficient number of actuators, conduits, and doors or flaps may be provided as part of the overall HVAC system so as to permit separate temperature control of the driver's side, passenger's side, and rear seat portion of the cabin.

Depending on the type of door or flap, the extent of expected motion in terms of rotational angle can vary anywhere between a very small angle to a maximum angle of 350 degrees. For example, doors or flaps in conduits that control fluid communication between the heater core and the cabin may very from a fully closed position to a fully opened position over a 90 degree rotation. Doors or flaps controlling air diversion can have an operative range up to 350 degrees. Within the conduits are stops 82, 84 positioned to physically stop movement of the door or flap 70 beyond these locations. When the door is rotated counterclockwise against a stop, this is referred to as the "low-end stop." When the door is rotated clockwise against a stop, this is referred to as a "high-end stop."

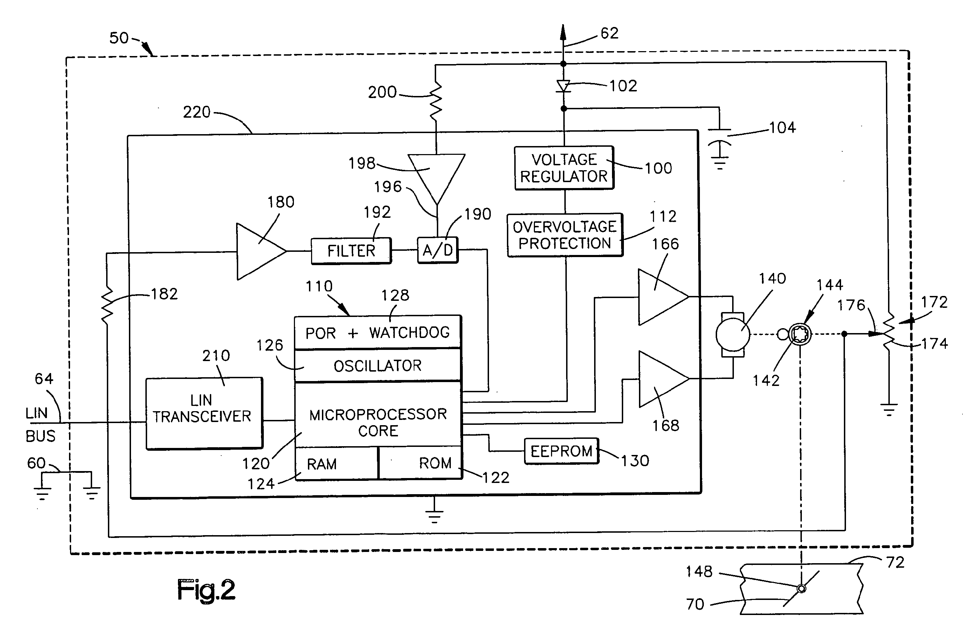

Referring to Fig. 2, the operation of the actuators will be appreciated. Although actuator 50 is shown and described in detail, it is to be understood that all of the actuators of the HVAC system 20 are identical. The electrical ground connection of the actuator 50 is connected to line 60 and the positive electrical power connection is made to line 62. The power connection 62 is connected to an internal voltage regulator 100 through diode 102. A filter capacitor 104 is connected between the input of the voltage regulator 100 and electrical ground. The voltage regulator provides regulated electrical power for a controller 110 through an over voltage protection circuit 112.

The controller 110 is a microcontroller including a microprocessor 120, associated read-only memory 122 ("ROM"), random-access memory 124 ("RAM"), an oscillator 126, and a power-on-reset ("POR") and watchdog function 128. An electronically-erasable-programmable-read-only memory 130 ("EEPROM") is connected to the controller 110.

Referring to Figs. 2-5, the actuator 50 includes a bi-directional electric motor 140 drivingly connected to a keyed output shaft 142 through a gear arrangement 144. The output shaft 142 extents out from the actuator and includes a key portion 146. The conduit door 70 includes a keyed shaft receiving portion 148. The door 70 is mounted to a bearing within the conduit housing 72 so as to permit rotation of the door 70. This keyed output shaft 142 and keyed shaft receiving portion 148 permits a known rotational alignment between the actuator output shaft 142 and the door 70.

The actuator 50 is physically secured to the conduit housing 72 which is, in turn, secured to a structure of the vehicle, using mounting bolts 150, 151, and 152 screwed into mounting bosses 154, 155, and 156, respectively. The mounting bosses 154-156 are located relative to the keyed receiving portion 148 so that when the actuator is mounted to the conduit 72, a know rotational relationship exists between the actuator and the door 70.

When the gears 144 turn when driven by the motor 140, the door or flap 70 rotates either counterclockwise or clockwise depending on the direction of gear rotation. The direction of gear rotation is, of course, controlled by the drive direction of the motor 140.

The controller 110 is controllably connected to the motor 140 through an H-bridge drive arrangement shown schematically as drive circuits 166 and 168. To drive the motor in a first direction, e.g., counterclockwise, current is passed through the motor in a first direction. To drive the motor in a second direction, e.g., clockwise, current is passed through the motor in a second direction. The operation of a motor driven through an H-bridge is known in the art.

A position sensor 172 is operatively connected to the axial 158 of the actuator 50. The position sensor 172 includes a potentiometer having a resistor 174 operatively connected across the source of electrical energy available on line 62 and electrical ground available on line 60. A wiper arm 176 of the potentiometer is connected to the axial 144 so that the rotational position of the axial 144 controls the position of the wiper arm across the resistor 174. Therefore, a voltage value present at the wiper arm 176 is indicative of the rotation position of the axial 142, and, in turn, the rotational position of the door 70 in the conduit 7,2. The direction of rotation associated with the high-end stop and the low-end stop is dependent on the polarity of the feedback potentiometer. Use of a potentiometer as a position sensor is an example of one type of position sensor that may be used with the present invention. Other types of position sensors can be used such as optic, Hall-effect, capacitive, etc.

The wiper arm 176 is electrically connected to the input of an amplifier circuit 180 through a current limiting resistor 182. The output of the amplifier, which is indicative of the rotational position of the door 70, is connected to the input of an analog-to-digital ("A/D") converter 190 through a filter 192. The A/D converter 190 is supplied with a reference voltage value 196 output from an amplifier circuit 198. The input of the amplifier circuit 198 is connected to the supply of electrical power on line 62 through a current limiting resistor 200. Since the voltage sensed and provided at the output from the wiper arm 176 is dependent on the supply voltage on line 62, the value of that supply voltage is provided to the A/D converter to ratiometrically account for voltage variations on the supply line 62.

The output of the A/D converter 190 is connected to the controller 110. The controller 110, therefore, "knows" the position of the door 70. During driving movement of the door 70 from one position to another position, the controller can monitor the progress of the door movement from the feedback signal provided by the sensor 172. In accordance with one embodiment of the present invention, the sensor 172 and A/D converter are selected so as to provide 1024 A/D counts over 350 degrees of possible rotation of the output shaft 142.

The maximum counterclockwise and the maximum clockwise rotation of the door 70 is a function of the position of the stops 82 and 84, respectively, within the conduit housing 72. The span of door movement is the total angular rotation from the maximum counterclockwise rotation to the maximum clockwise rotation. If the door 70 reaches one of the stops 82, 84 that prevent further movement of the door and the motor 140 is still energized to try and drive the door further, this situation is considered a stall condition. The controller detects a stall condition by "knowing" that a drive signal is being output to the motor and no door movement is occurring as sensed by the position feedback signal from sensor 172. The present invention contemplates that other stall detection arrangements can be used such as by monitoring for an over current condition of the motor.

If a door's span is 90 degrees, for example, as may occur in moving the door from a fully open to a fully closed position, the change in the A/D count over this span would be approximately 263 counts assuming the feedback and A/D arrangement of an exemplary embodiment of the present invention provides 1024 A/D counts over 350 degrees. If the system is designed to continuously keep an A/D count value indicative of door angle, the system can be arranged to provide the small count value when a door is more counterclockwise and an increasing count value as to door is moved in a clockwise direction. If desired, the system could be designed to achieve the opposite. The description of an exemplary embodiment of the present invention will assume that the A/D count increases as the door is moved more clockwise.

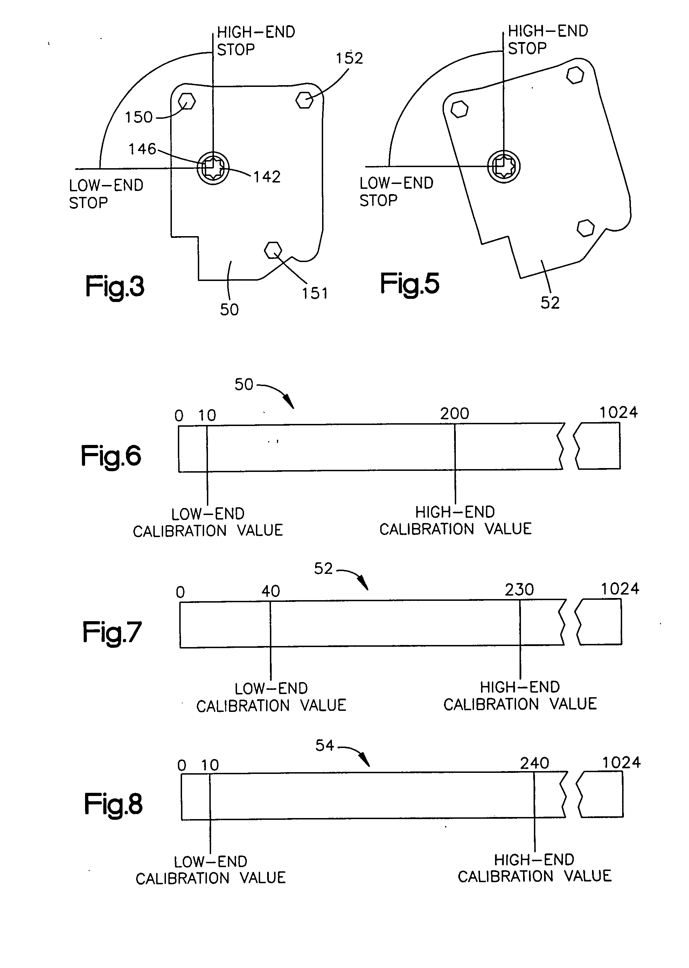

In accordance with the present invention, a full counterclockwise position of the door, i.e., against the stop in the counterclockwise direction, is not necessarily a zero A/D count value. The initial A/D count value is determined by the location of the mounting bosses 154-156 on the conduit housing and the key receiving portion 148. Referring to Figs. 3-5, it can be seen that the mounting bosses in Fig. 4 will result in mounting the actuator of Fig. 3 in an orientation as shown. If a door conduit housing has its bosses rotated counterclockwise, then an actuator will be mounted with the orientation shown in Fig. 5.

When a door is fully counterclockwise against stop 82, this is the low-end stop (the lowest A/D count value). When a door is fully clockwise against stop 84, this is the high-end stop (the highest A/D count value). In accordance with the present invention, two doors in an HVAC system can have the same door span, e.g., 90 degrees, but then must have different low-end stop values. Also, two doors can have the same low-end stop value, but must then have different span values.

It should be remembered, that all the actuators of the present invention are identical. It is the mounting arrangement associated with each door that establishes the low-end value. The present invention uses the fact that a mounted actuator in the HVAC system 20 will have a different combination of low-end value and span value to allow the actuator to learn its address needed for control of the HVAC system 20. This address learn process is described below.

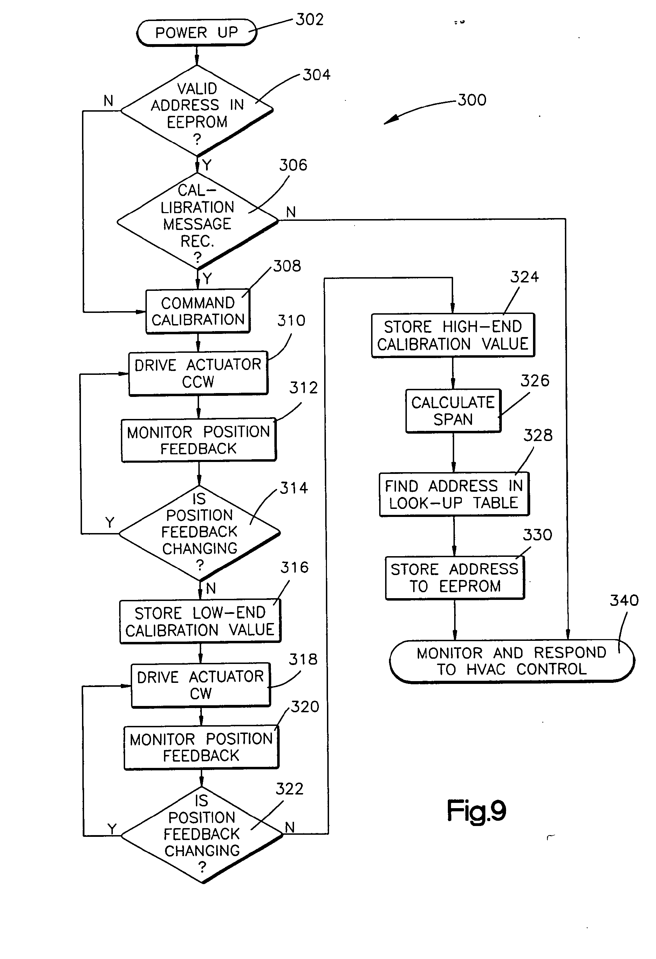

Referring to Fig. 6, an exemplary low-end, high-end values for an actuator are shown. An actuator mounted in accordance with this example has a low-end A/D count of 10 and a high-end A/D count of 200, with a span of 190 A/D counts. In Fig. 7, another exemplary actuator mounting arrangement result is shown having a low-end A/D count of 40 and a high-end A/D count of 230, with a span of 190 A/D counts. Although the span values for the Fig. 6 and Fig. 7 mounting arrangements are the same, the low-end values are different. In Fig. 8, another exemplary actuator mounting arrangement result is shown having a low-end A/D count of 10 and a high-end A/D count of 240, with a span of 230 A/D counts. Although the low-end values for the Fig. 6 and Fig. 8 mounting arrangements are the same, the span values are different.

The controller 110 of actuator 50 is connected to the command or communication line 64 through a LIN transceiver 210. This provides communication between the HVAC controller 30 and the actuator controller 110 of the actuator 50 using LIN protocol. All of the circuitry and functions performed within box 220 can be embodied in an application specific integrated circuit ("ASIC").

Each of the actuators 50-54 have an associated address. When the HVAC controller 30 wants to command one of the actuators to move that actuator's associated conduit door, it transmits a two part serial communication signal on the command line 64 connected to all actuators. The first part of the serial communication is an actuator address for that actuator to be commanded. The second part of the serial communication is the command to further open or further close the conduit door. All other actuators ignore the command when the address portion of the serial communication does not match its stored address.

In accordance with a preferred embodiment of the present invention, the address for an actuator is stored in the EEPROM 130. As mentioned, each of the actuators of the system are identical. None of the actuators have a present address in the EEPROM 130 before the actuator is placed in an HVAC system 20 and the learn mode process in accordance with the present invention is performed. The address of each actuator that will be its present address (the address it will respond to when the HVAC controller 30 transmits an address for actuator control), in accordance with the present invention, is learned by the actuator during a learn process also referred to herein as a calibration process.

All possible actuator addresses are prestored in either the ROM 122 or the EEPROM 130. If an HVAC system 20 has 10 actuators, then at least 10 different addresses must be prestored. In response to the calibration or learn procedure discussed below, each actuator learns which of the stored addresses it is to respond too, and then stores that learned address from all possible stored addresses in the EEPROM as its present address.

Referring to Fig. 9, the address learn or calibration process 300 will be appreciated. In step 302, a system reset occurs upon a power up condition of the actuator. During reset, the operating program stored in the controller ROM 122 is initiated. In step 304, the process determines whether a valid present address is stored in the EEPROM 130. If the actuator was previously installed and operated in the HVAC system 20, a present address would be stored in the EEPROM 130. If the determination in step 304 is affirmative, the process proceeds to step 306 where it is determined whether a calibration message was received from the HVAC controller 110. The HVAC controller 110 can forward a command to any and all actuators in the system 20 to begin a calibration or learn process. From either an affirmative determination in step 306 (calibration message received from HVAC controller 30) or a negative determination from step 304 (no valid present address stored) the process goes to step 308. A negative determination occurs in step 304 when a new actuator is placed in the system 20 since a new actuator is not provided with a present address.

In step 308, the controller 110 enters into a learn or calibration process. In step 310, the controller 110 drives the motor 140 in a direction so as to drive the associated door counterclockwise. The feedback signal from position sensor 172 is monitored in step 312 and a determination is made in step 314 as to whether the position feedback signal has a changing value. This is the stall determination. If the position feedback signal is changing, i.e., the determination is affirmative, the process loops back to step 310 and the door is continued to be driven counterclockwise until the determination in step 314 is negative. Once the determination in step 314 is negative, meaning that a stall condition now exists, the drive signal to the motor is terminated and the then present reading of the position sensor in A/D counts is stored in memory in step 316 as the low-end calibration value or low-end stop value.

The process then proceeds to step 318 where the controller 110 drives the motor 140 in a direction so as to drive the associated door clockwise. The feedback signal from position sensor 172 is monitored in step 320 and a determination is made in step 320 as to whether the position feedback signal has a changing value. This is the stall determination. If the position feedback signal is changing, i.e., the determination is affirmative, the process loops back to step 318 and the door is continued to be driven clockwise until the determination in step 322 is negative. Once the determination in step 322 is negative, meaning that a stall condition now exists, the drive signal to the motor is terminated and the then present reading of the position sensor in A/D counts is stored in memory in step 324 as the high-end calibration value or high-end stop value.

In step 326, the door span value is calculated by subtracting the value of the low-end calibration value from the high-end calibration value. The look-up table of all possible actuator addresses is stored in the ROM 122. In step 328, the address corresponding to the determined low-end calibration value in step 316 and the determined span value in step 326 is looked up and then stored in the EEPROM in step 320 as a valid or present address. From step 330 or from a negative determination in step 306 (meaning that a valid address was previously stored in the EEPROM and no calibration command was received from the HVAC controller 30), the process proceeds to step 340 where the actuator controller 110 monitors line 64 and responds to commands following the receipt of its address.

As mentioned, all actuators in the system have a different combination of low-end calibration values and span values. Since manufacturing tolerances make it difficult to have exact low-end values, high-end values, and span values, it is necessary that the look-up table of addresses must cover ranges of values. The look-up table must then be tailored to the unit assembly design and expected tolerance values.

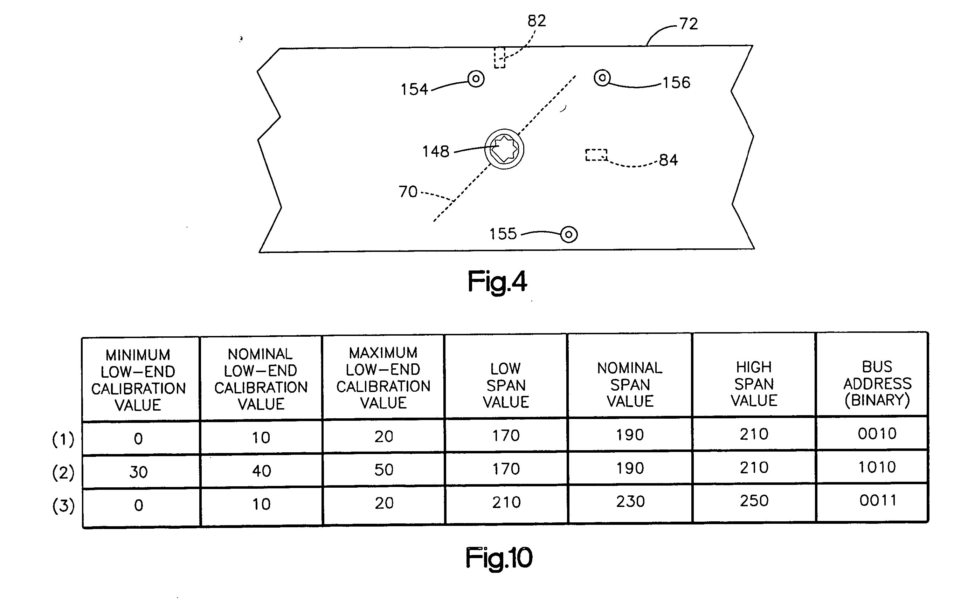

Referring to Fig. 10, an exemplary table is shown for three sample addresses with tolerances of plus or minus 10 A/D counts on the low-end calibration values. Row (1) in Fig. 10 is for the example shown in Fig. 6. Row (2) in Fig. 10 is for the example shown in Fig. 7. Row (3) in Fig. 10 is for the example shown in Fig. 8. The plus or minus tolerance of 10 A/D counts is also true for the high-end calibration values and explains the tolerances on the span value determinations. If the determined values fall within these ranges, the bus addresses are as shown. Again, no two actuators, because of the door span and mounting arrangements, will have the same combination of low-end calibration value and span value. The system table in the ROM of each actuator must have all possible addresses for a given system.

The present invention can also be used in a "simple" system having a small number of actuators. In such a system, it is possible to have the address selected in response to a single operating parameter, e.g., a low-end calibration value, a high-end calibration value, or span. In such a "simple" system, only the parameter used for address selection would have a predetermined tolerance range for address selection. This operating parameter must be different for all actuators so that an address can be associated with the determined operating parameter.

The present invention has been described with reference to HVAC system having actuators for moving conduit doors or flaps or for moving air diverters. The present invention is also applicable to any plural actuator system that controls fluid flow including both gas and liquid as well as a system having rotatable or slidable doors or flaps. Those skilled in the art will further appreciate that the addressing method and apparatus of the present invention is applicable to any system having plural actuators where the actuators are to be separately addressed for controlling response to a command signal.

From the above description of the invention, those skilled in the art will perceive improvements, changes and modifications. Such improvements, changes and modifications within the skill of the art are intended to be covered by the appended claims.
It should be noted that objects and advantages of the invention may be attained by means of compatible combination(s) particularly pointed out in the items of the following summary of the invention.

### SUMMARY OF THE INVENTION

1. A method for establishing an actuator address in a system having plural actuators, said method comprising the steps of:
   storing all desired addresses;
   mounting an actuator of the plurality of actuators to a device using said plurality of actuators;
   determining at least one operating parameter of the mounted actuator; and
   selecting the address from the stored desired addresses for the mounted actuator in response to the at least one operating parameter of the mounted actuator.
2. The method wherein the step of mounting includes mounting the actuator to a fluid flow control door of an HVAC system in a known orientation.
3. The method wherein the step of determining determines at least two operating parameters of the mounted actuator and the step of selecting selects the address in response to the at least two operating parameters.
4. The method wherein the step of determining at least two operating parameters includes the step of determining a low-end calibration value and a span value.
5. The method wherein the step of determining the low-end calibration value includes the steps energizing the mounted actuator to drive in a first direction until a first stall condition occurs and monitoring a first actuator position when the first stall condition occurs.
6. The method wherein the step of determining a span value includes the steps of energizing the mounted actuator to drive in a second direction until a second stall condition occurs and monitoring a second actuator position when the second stall condition occurs, subtracting the first actuator position from the second actuator position, the resultant subtraction being the span value.
7. The method wherein the step of determining at least one operating parameter includes the step of determining a low-end calibration value.
8. The method wherein the step of determining at least one operating parameter includes the step of determining a high-end calibration value.
9. The method wherein the step of determining at least one operating parameter includes the step of determining a span value.
10. A method for establishing an actuator address in a system having plural actuators, said method comprising the steps of:
   storing all desired addresses to correspond to the plural actuators;
   mounting an actuator of the plural actuators;
   actuating the mounted actuator in a first direction and measuring a first operating parameter of the mounted actuator;
   actuating the mounted actuator in a second direction and measuring a second operating parameter of the mounted actuator; and
   selecting the address from the stored desired addresses for the mounted actuator in response to the first operating parameter and the second operating parameter.
11. The method wherein said step of mounting includes mounting the actuator to a fluid flow control door of an HVAC system and said first operating parameter is a low-end stop value.
12. The method wherein said step of measuring the second operating parameter includes the step of measuring a span of the fluid flow control door.
13. A method for establishing an actuator address in a HVAC system having plural actuators for controlling associated fluid flow control doors in the HVAC system, said method comprising the steps of:
   storing all desired addresses to correspond to the plural actuators;
   mounting an actuator of the plural actuators to an associated door in a know mechanical orientation;
   actuating the mounted actuator to move the associated door in a first direction and measuring a first operating parameter;
   actuating the mounted actuator to move the associated door in a second direction and measuring a second operating parameter; and
   selecting the address from the stored desired addresses for the mounted actuator in response to the first operating parameter and the second operating parameter.
14. The method further including the step of measuring said first operating parameter by measuring a low-end stop value of the associated door.
15. The method further including the step of measuring said second operating parameter by measuring a high-end stop value and subtracting the low-end stop value from the high-end stop value, a result of the step of subtracting being the second operating parameter.
16. An actuator for use in a HVAC system having plural fluid flow control doors movable to control fluid flow in the HVAC system, each door having an associated actuator, said actuator comprising:
   mounting means for securing the actuator to an associated door in a know rotational orientation with the associated door;
   position sensor senses a position of the associated door and provides a signal indicative thereof;
   motor for, when energized, moving the associated door; and
   controller for controlling energization of the motor and monitoring the position sensor signal, said controller including means for determining at least one actuator operating parameter of the actuator and means for determining an address for the actuator in response to the determined at least one operating parameter.
17. The apparatus wherein said mounting means includes a keyed shaft extending from said actuator and said associated door has a keyed shaft receiving portion connect to said associated door for receiving said keyed shaft portion.
18. The apparatus wherein said HVAC system has mounting bosses associated with said associated door, said mounting bosses positioned to receive said actuator in a known orientation relative to said associated door.
19. The apparatus wherein said HVAC system has mounting bosses associated with said associated door, said mounting bosses positioned to receive said actuator in a known orientation relative to said associated door.
20. The apparatus wherein said position sensor includes a potentiometer.
21. The apparatus wherein said controller further includes a look-up table having all possible actuator addresses needed by the HVAC system.
22. The apparatus wherein said controller includes means for actuating said actuator to move the door fully counterclockwise and then fully clockwise, the fully counterclockwise position being a first operating parameter and door span being a second operating parameter, said controller determining the address for the actuator in response to the first and second operating parameters.
23. The apparatus wherein said controller further includes means for determining a stall condition of the actuator, said controller determining the full counterclockwise position and the full clockwise position from a determined stall condition.
24. The apparatus wherein said means for determining a stall condition is responsive to the occurrence of energization of the motor and no change in the sensed position signal.
25. The actuator wherein said controller includes means for determining a low-end calibration value, said low-end calibration value being said at least one operating parameter.
26. The actuator wherein said controller includes means for determining a high-end calibration value, said high-end calibration value being said at least one operating parameter.
27. The actuator wherein said controller includes means for determining a span value, said span value being said at least one operating parameter.

## Claims

1. A method for establishing an actuator address in a system having plural actuators, said method comprising the steps of:
storing all desired addresses;
mounting an actuator of the plurality of actuators to a device using said plurality of actuators;
determining at least one operating parameter of the mounted actuator; and
selecting the address from the stored desired addresses for the mounted actuator in response to the at least one operating parameter of the mounted actuator.

2. The method of claim 1 wherein the step of mounting includes mounting the actuator to a fluid flow control door of an HVAC system in a known orientation.

3. The method of claim 1 wherein the step of determining determines at least two operating parameters of the mounted actuator and the step of selecting selects the address in response to the at least two operating parameters,
and/ or wherein preferably the step of determining at least two operating parameters includes the step of determining a low-end calibration value and a span value,
and/ or wherein preferably the step of determining the low-end calibration value includes the steps energizing the mounted actuator to drive in a first direction until a first stall condition occurs and monitoring a first actuator position when the first stall condition occurs,
and/ or wherein preferably the step of determining a span value includes the steps of energizing the mounted actuator to drive in a second direction until a second stall condition occurs and monitoring a second actuator position when the second stall condition occurs, subtracting the first actuator position from the second actuator position, the resultant subtraction being the span value.

4. The method of claim 1 wherein the step of determining at least one operating parameter includes the step of determining a low-end calibration value,
and/ or preferably
the step of determining a high-end calibration value,
and/ or preferably
the step of determining a span value.

5. A method for establishing an actuator address in a system having plural actuators, said method comprising the steps of:
storing all desired addresses to correspond to the plural actuators;
mounting an actuator of the plural actuators;
actuating the mounted actuator in a first direction and measuring a first operating parameter of the mounted actuator;
actuating the mounted actuator in a second direction and measuring a second operating parameter of the mounted actuator; and
selecting the address from the stored desired addresses for the mounted actuator in response to the first operating parameter and the second operating parameter.

6. The method of any of the preceding claims wherein the step of mounting includes mounting the actuator to a fluid flow control door of an HVAC system and said first operating parameter is a low-end stop value,
and/ or wherein preferably said step of measuring the second operating parameter includes the step of measuring a span of the fluid flow control door.

7. A method for establishing an actuator address in a HVAC system having plural actuators for controlling associated fluid flow control doors in the HVAC system, said method comprising the steps of:
storing all desired addresses to correspond to the plural actuators;
mounting an actuator of the plural actuators to an associated door in a know mechanical orientation;
actuating the mounted actuator to move the associated door in a first direction and measuring a first operating parameter;
actuating the mounted actuator to move the associated door in a second direction and measuring a second operating parameter; and
selecting the address from the stored desired addresses for the mounted actuator in response to the first operating parameter and the second operating parameter.

8. The method of any of the preceding claims further including the step of measuring said first operating parameter by measuring a low-end stop value of the associated door,
and/ or further preferably including the step of measuring said second operating parameter by measuring a high-end stop value and subtracting the low-end stop value from the high-end stop value, a result of the step of subtracting being the second operating parameter.

9. An actuator for use in a HVAC system having plural fluid flow control doors movable to control fluid flow in the HVAC system, each door having an associated actuator, said actuator comprising:
mounting means for securing the actuator to an associated door in a know rotational orientation with the associated door;
position sensor senses a position of the associated door and provides a signal indicative thereof;
motor for, when energized, moving the associated door; and
controller for controlling energization of the motor and monitoring the position sensor signal, said controller including means for determining at least one actuator operating parameter of the actuator and means for determining an address for the actuator in response to the determined at least one operating parameter.

10. The apparatus of any of the preceding claims wherein said mounting means includes a keyed shaft extending from said actuator and said associated door has a keyed shaft receiving portion connect to said associated door for receiving said keyed shaft portion,
and/ or wherein preferably said HVAC system has mounting bosses associated with said associated door, said mounting bosses positioned to receive said actuator in. a known orientation relative to said associated door,
and/ or wherein preferably said HVAC system has mounting bosses associated with said associated door, said mounting bosses positioned to receive said actuator in a known orientation relative to said associated door,
and/ or wherein preferably said position sensor includes a potentiometer,
and/ or wherein preferably said controller further includes a look-up table having all possible actuator addresses needed by the HVAC system.

11. The apparatus of claim 9 wherein said controller includes means for actuating said actuator to move the door fully counterclockwise and then fully clockwise, the fully counterclockwise position being a first operating parameter and door span being a second operating parameter, said controller determining the address for the actuator in response to the first and second operating parameters.

12. The apparatus of any of the preceding claims wherein said controller further includes means for determining a stall condition of the actuator, said controller determining the full counterclockwise position and the full clockwise position from a determined stall condition,
and/ or wherein preferably said means for determining a stall condition is responsive to the occurrence of energization of the motor and no change in the sensed position signal,
and/ or wherein preferably said controller includes means for determining a low-end calibration value, said low-end calibration value being said at least one operating parameter,
and/ or wherein preferably said controller includes means for determining a high-end calibration value, said high-end calibration value being said at least one operating parameter,
and/ or wherein preferably said controller includes means for determining a span value, said span value being said at least one operating parameter.
